# EUROPEAN PATENT APPLICATION

(11) **EP 2 565 859 A1**
(43) Date of publication of application: **06.03.2013**
(21) Application number: 12176966.5
(22) Date of filing: 18.07.2012
(51) Int. Cl.: G08C 23/04

(54) **Image display apparatus, remote controller, and method for operating the same**

(30) Priority: 05.09.2011 KR 20110089727
(71) Applicant: LG Electronics Inc., Yeongdeungpo-gu Seoul 150-721 (KR)
(72) Inventor: Lee, Seungshin, 137-724 Seoul (KR); Lee, Kwontae, 137-724 Seoul (KR)
(74) Representative: Cabinet Plasseraud

(57) **Abstract**

A method for operating an image display apparatus is discussed. The method includes displaying an InfraRed (IR) blaster menu screen, receiving a selection input for selecting one of electronic devices included in the IR blaster menu screen, and transmitting IR format key information about the selected electronic device or device information about the selected electronic device to a remote controller according to the selection input.

## Description

### CROSS-REFERENCE TO RELATED APPLICATION

This application claims priority to and the benefit of Korean Patent Application No. 10-2011-0089727, filed on September 5, 2011 in the Korean Intellectual Property Office, the disclosure of which is incorporated herein by reference.

### BACKGROUND OF THE INVENTION

### 1. Field of the invention

Embodiments of the invention relate to an image display apparatus, a remote controller, and a method for operating the same, and more particularly, to an image display apparatus, a remote controller, and a method for operating the same, which can increase user convenience.

### 2. Description of the Related Art

An image display apparatus has a function of displaying images to a user. The image display apparatus can display a broadcast program selected by the user on a display from among broadcast programs transmitted from broadcasting stations. The recent trend in broadcasting is a worldwide shift from analog broadcasting to digital broadcasting.

As it transmits digital audio and video signals, digital broadcasting offers many advantages over analog broadcasting, such as robustness against noise, less data loss, ease of error correction, and the ability to provide high-definifion, clear images. Digital broadcasting also allows interactive viewer services, compared to analog broadcasting.

### SUMMARY OF THE INVENTION

Therefore, the invention has been made in view of the above problems, and it is an object of the invention to provide an image display, a remote controller, and a method for operating the same, which can increase user convenience.

It is another object of the invention to provide a method for easily controlling another electronic device using an image display apparatus and a remote controller.

In accordance with an aspect of the invention, the above and other objects can be accomplished by the provision of a method for operating an image display apparatus, including displaying an InfraRed (IR) blaster menu screen, receiving a selection input for selecting one of electronic devices included in the IR blaster menu screen, and transmitting IR format key information about the selected electronic device or device information about the selected electronic device to a remote controller according to the selection input.

In accordance with another aspect of the invention, there is provided a method for operating a remote controller, including receiving an IR format key information about an electronic device or device information about the electronic device from an image display apparatus, generating an IR signal suitable for an IR format key of the electronic device based on the received IR format key information, and transmitting the IR signal to the electronic device.

In accordance with another aspect of the invention, there is provided an image display apparatus including a display configured to display an IR blaster menu screen, an interface configured to receive a selection input for selecting one of electronic devices included in the IR blaster menu screen, and a controller configured to control transmission of IR format key information about the selected electronic device or device information about the selected electronic device to a remote controller according to the selection input.

In accordance with a further aspect of the invention, there is provided a remote controller including a first module configured to receive an IR format key information about an electronic device or device information about the electronic device from an image display apparatus, a controller configured to control generation or changing of an IR signal suitable for an IR format key of the electronic device based on the received information, and a second module configured to transmit the IR signal to the electronic device.

### BRIEF DESCRIPTION OF THE DRAWINGS

The above and other objects, features and other advantages of the invention will be more clearly understood from the following detailed description taken in conjunction with the accompanying drawings, in which:

FIG. 1 is a view referred to for describing an InfraRed (IR) blaster;

FIG. 2 is a block diagram of an image display apparatus according to an embodiment of the invention;

FIG. 3 is a block diagram of a controller illustrated in FIG. 2;

FIG. 4 illustrates a method for controlling a remote controller illustrated in FIG. 2;

FIG. 5A is a perspective view of the remote controller according to an embodiment of the invention;

FIG. 5B is a block diagram of the remote controller;

FIG. 6 is a flowchart illustrating a method for operating the image display apparatus according to an embodiment of the invention;

FIGS. 7 and 8 are views referred to for describing the method for operating the image display apparatus, illustrated in FIG. 6;

FIG. 9 is a flowchart illustrating a method for operating the remote controller according to an embodiment of the invention;

FIGS. 10 and 11 are views referred to for describing the method for operating the remote controller, illustrated in FIG. 9; and

FIG. 12 is a diagram illustrating the method for operating the image display apparatus and the remote controller.

### DETAILED DESCRIPTION OF THE EMBODIMENTS

Embodiments of the invention will be described below with reference to the attached drawings.

The terms "module" and "unit" used to signify components are used herein to help the understanding of the components and thus they should not be considered as having specific meanings or roles. Accordingly, the terms "module" and "unit" may be used interchangeably.

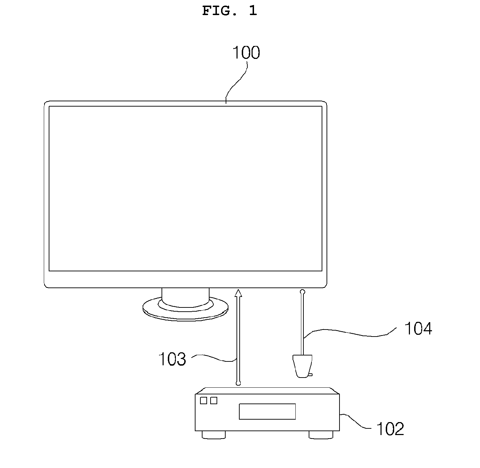

FIG. 1 is a view referred to for describing an InfraRed (IR) blaster. A major IR blaster function is to receive a control signal of a specific format and transmit the control signal in the form of an IR signal suitable for controlling a nearby device to a light receiver of the nearby device. The IR blaster function may be implemented in an image display apparatus or by using an image display apparatus.

Referring to FIG. 1, a universal IR microcomputer may be built into an image display apparatus 100 to control other electronic device. When a controller of the image display apparatus 100 transmits information regarding input information received through a cable 103 to the IR microcomputer, the IR microcomputer controls an external device 102 having an IR light receiver to which a cable IR transmitter (or an IR blaster cable) 104 is attached. The IR microcomputer may be incorporated into the controller.

In this case, the IR blaster cable 104 is required in addition to the cable 103 through which data is transmitted and received.

This IR blaster function is effective only to nearby external devices and the number of controllable external devices is limited depending on the number of cable IR transmitters 104.

Meanwhile, it is possible to contrd a plurality of nearby devices by getting a plurality of wireless IR transmitters ready in a plurality of directions in an external IR blaster box connected to an image display apparatus.

However, only limited control is possible according to the directions of the wireless IR transmitters. Therefore, an external device located at an angle beyond an IR reception range cannot be controlled.

Accordingly, the invention provides an operation method favorable in terms of spatial limitations and extension for support of external devices, when an IR blaster function is performed on external electronic devices.

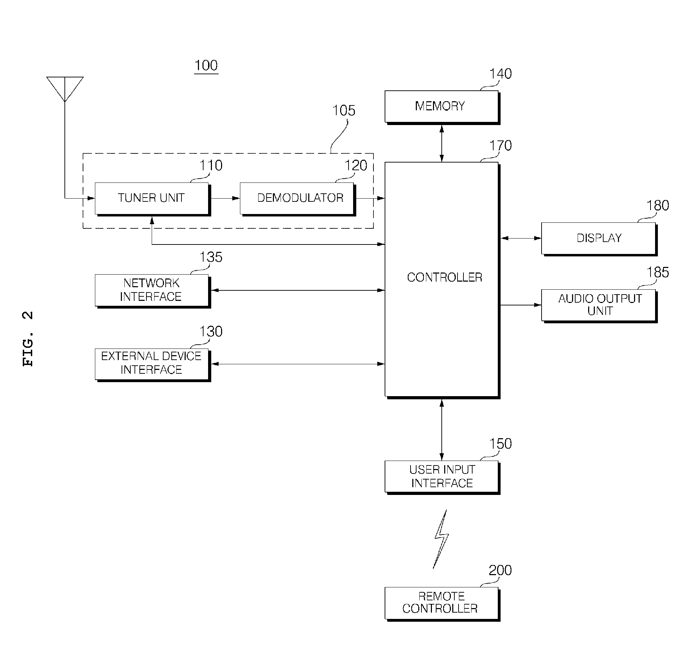

FIG. 2 is a block diagram of an image display apparatus according to an embodiment of the invention. Referring to FIG. 1, an image display apparatus 100 according to an embodiment of the invention includes a broadcasting receiver 105, an external device interface (or a network interface) 130, a network interface 135, a memory 140, a user input interface 150, a sensor unit, a controller 170, a display 180, and an audio output unit 185.

The broadcasting receiver 105 may include a tuner unit 110, a demodulator 120, and a network interface 130. As needed, the broadcasting receiver 105 may be configured so as to include only the tuner unit 110 0 and the demodulator 120 or only the network interface 130.

The tuner unit 110 selects a Radio Frequency (RF) broadcast signal corresponding to a channel selected by a user or an RF broadcast signal corresponding to each of pre-stored channels from among a plurality of RF broadcast signals received through an antenna and downconverts the selected RF broadcast signal into a digital Intermediate Frequency (IF) signal or an analog baseband Audio/Video (A/V) signal.

More specifically, if the selected RF broadcast signal is a digital broadcast signal, the tuner unit 110 downconverts the selected RF broadcast signal into a digital IF signal, DIF. On the other hand, if the selected RF broadcast signal is an analog broadcast signal, the tuner unit 110 downconverts the selected RF broadcast signal into an analog baseband A/V signal, CVBS/SIF. That is, the tuner unit 110 may be a hybrid tuner capable of processing not only digital broadcast signals but also analog broadcast signals. The analog baseband A/V signal CVBS/SIF may be directly input to the controller 170.

The tuner unit 110 may be capable of receiving RF broadcast signals from an Advanced Television Systems Committee (ATSC) single-carrier system or from a Digital Video Broadcasting (DVB) multi-carrier system.

The tuner unit 110 may sequentially select a number of RF broadcast signals corresponding to all broadcast channels previously stored in the image display apparatus 100 by a channel add function from a plurality of RF signals received through the antenna, and may downconvert the selected RF broadcast signals into IF signals or baseband A/V signals.

The tuner unit 110 may include a plurality of tuners for receiving broadcast signals on a plurality of channels. Alternatively, the tuner unit 110 may be implemented into a single tuner for simultaneously receiving broadcast signals on a plurality of channels.

The demodulator 120 receives the digital IF signal DIF from the tuner unit 110 and demodulates the digital IF signal DIF.

The demodulator 120 may perform demodulation and channel decoding on the digital IF signal DIF, thereby obtaining a stream signal TS. The stream signal TS may be a signal in which a video signal, an audio signal and a data signal are multiplexed.

The stream signal TS may be input to the controller 170 and thus subjected to demultiplexing and A/V signal processing. The processed video and audio signals are output to the display 180 and the audio output unit 185, respectively.

The external device interface 130 may serve as an interface between a connected external device and the image display apparatus 100. For interfacing, the external device interface 130 may include an A/V Input/Output (I/O) unit and/or a wireless communication module.

The external device interface 130 may be connected to an external device such as a Digital Versatile Disk (DVD) player, a Blu-ray player, a game console, a camera, a camcorder, a computer (e.g., a laptop computer), or a set-top box, wirelessly or by wire. Then, the external device interface 130 transmits and receives signals to and from the external device.

The A/V I/O unit of the external device interface 130 may receive video, audio, and/or data signals from the external device. The wireless communication module of the external device interface 130 may perform short-range wireless communication with other electronic devices.

The network interface 135 serves as an interface between the image display apparatus 100 and a wired/wireless network such as the Internet. The network interface 135 may receive content or data from the Internet, a Content Provider (CP), or a Network Provider (NP).

The network interface 135 may conduct data communication with electronic devices near to the image display apparatus 100. The network interface 135 may receive device information about other electronic devices and information about remote controllable channels, frequencies, or codes of the other electronic devices.

The memory 140 may store various programs necessary for the controller 170 to process and control signals, and may also store processed video, audio and data signals.

The memory 140 may temporarily store a video, audio and/or data signal received from the external device interface 130. The memory 140 may store information about broadcast channels by the channel-add function such as a channel map.

In addition, the memory 140 may store IR format key codes for controlling other electronic devices by IR signals or an IR format key database for a plurality of electronic devices.

While the memory 140 is shown in FIG. 2 as configured separately from the controller 170, to which embodiments of the invention are not limited, the memory 140 may be incorporated into the controller 170, for example.

The user input interface 150 transmits a signal received from the user to the controller 170 or transmits a signal received from the controller 170 to the user.

For example, the user input interface 150 may receive various user input signals such as a power-on/off signal, a channel selection signal, and a screen setting signal from a remote controller 200, provide the controller 170 with user input signals received from local keys, such as inputs of a power key, a channel key, a volume key, and a setting key, transmit a control signal received from a sensor unit for sensing a user gesture to the controller 170, or transmit a signal received from the controller 170 to the sensor unit.

In accordance with an embodiment of the invention, the user input interface 150 may receive personal information from the remote controller 200. Besides the personal information, the user input interface 150 may receive information about a Web server connected based on the personal information.

For example, if a portable terminal and the remote controller 200 are within a predetermined distance and thus communicate with each other by Near Field Communication (NFC), the remote controller 200 may receive personal information from the portable terminal and then transmit the personal information to the image display apparatus 100 by IR or RF communication. The user input interface 150 transmits the received personal information to the controller 170.

The personal information may include information about a user ID, password, and e-mail address required to use the portable terminal, information about a user ID, password, and e-mail address required to use the image display apparatus 100, information about a common user ID or password for a plurality of electronic devices including the portable terminal, information about a user ID and a password that are pre-stored in the portable terminal to access a specific Web server, information about a user ID and a password required to access a specific Web server in the portable terminal and the image display apparatus 100, or information about a user ID and a password required to access a server connected to the image display apparatus 100.

That is, the personal information may be information required to log in to a specific account for using an electronic device or a service.

Meanwhile, the user input interface 150 may receive device information, remote controllable channel information, frequency information, or code information about other nearby electronic devices around the image display apparatus 100 from the remote controller 200.

The controller 170 may demultiplex the stream signal TS received from the tuner unit 110, the demodulator 120, or the external device interface 130 into a number of signals and process the demultiplexed signals into audio and video data.

The video signal processed by the controller 170 may be displayed as an image on the display 180. The video signal processed by the controller 170 may also be transmitted to an external output device through the external device interface 130.

The audio signal processed by the controller 170 may be output to the audio output unit 185. Also, the audio signal processed by the controller 170 may be transmitted to the external output device through the external device interface 130.

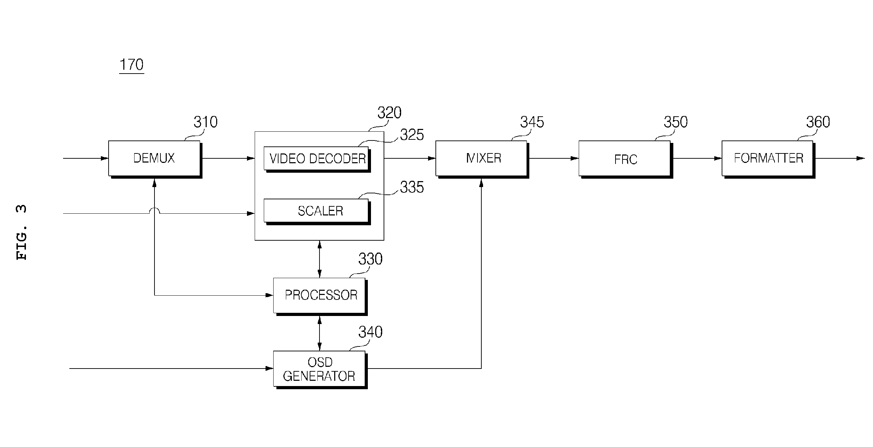

The controller 170 may include a demultiplexer (DEMUX) and a video processor, which will be described later with reference to FIG. 3.

In addition, the controller 170 may provide overall control to the image display apparatus 100. For example, the controller 170 may control the tuner unit 110 to select an RF broadcast signal corresponding to a user-selected channel or a pre-stored channel.

The controller 170 may control the image display apparatus 100 according to a user command received through the user input interface 150 or according to an internal program.

The controller 170 may also control the display 180 to display images. The image displayed on the display 180 may be a two-Dimensional (2D) or three-Dimensional (3D) still image or moving picture.

The controller 170 may control a particular object in the image displayed on the display 180 to be rendered as a 3D object. For example, the particular object may be at least one of a linked Web page (e.g. from a newspaper, a magazine, etc.), an Electronic Program Guide (EPG), a menu, a widget, an icon, a still image, a moving picture, or text.

The controller 170 may locate the user based on an image captured by a camera unit. Specifically, the controller 170 may measure the distance (a z-axis coordinate) between the user and the image display apparatus 100. In addition, the controller 170 may calculate x-axis and y-axis coordinates corresponding to the position of the user on the display 180.

In accordance with an embodiment of the invention, the controller 170 may control log-in based on personal information received from the remote controller 200. The log-in may be log-in to the image display apparatus 100, log-in to a server connected to the image display apparatus 100, or log-in to a specific Web server to which a user has subscribed using the personal information.

In case of log-in to the image display apparatus using a user ID and a password received from the remote controller 200, the controller 170 may control display of a personalized page set on a user account basis on the display 180. If an image is being played, the controller 170 may control display of the personalized page along with an on-going image. Alternately, the on-going image may be switched to the personalized page.

In case of log-in to a server connected to the image display apparatus 100, the controller 170 may control display of a server connection page received from the server on the display 180. Specifically, the server connection page may be an app server page. If an image is being played, the controller 170 may control display of the server connection page along with the on-going image. Alternately, the on-going image may be switched to the server connection page.

In the case where the received personal information is associated with a Web server connected to another electronic device, particularly a portable terminal, the controller 170 may control the image display apparatus 100 to access the Web server and may contrd display of a page of the accessed Web server on the display 180. The Web server may be a Social Networking Service (SNS) Web server. If an image is being played, the controller 170 may control display of the Web server page along with the on-going image. Alternately, the on-gdng image may be switched to the Web server page.

Upon receipt of the personal information in a power-off state of the image display apparatus 100, the controller 170 may contrd a power supply to supply power to the image display apparatus 100. That is, if the personal information is received through the user input interface 150 in an idle mode, the controller 170 may transition to a wake-up mode and may control the power supply to supply power to each module or unit of the image display apparatus 100.

Meanwhile, the controller 170 may determine whether each of other electronic devices around the image display apparatus 100 has been connected to the image display apparatus 100 according to personal information received from the remote controller 200 and device information, remote controllable channel information, frequency information, or code information about the other electronic devices, received through the network interface 135 or the user input interface 150. In the presence of a connected electronic device, the controller 170 may control display of an object indicating log-in of the electronic device on the display 180.

Alternately, the controller 170 may control transmission of device information, remote controllable channel information, frequency information, or code information about an electronic device based on the device information, remote controllable channel information, frequency information, or code information about the other electronic devices around the image display apparatus 100.

The image display apparatus 100 may further include a channel browsing processor for generating thumbnail images corresponding to channel signals or external input signals. The channel browsing processor may extract some of the video frames of each of stream signals TS received from the demodulator 120 or stream signals received from the external device interface 130 and display the extracted video frames on the display 180 as thumbnail images. The thumbnail images may be output to the controller 170 after they are encoded together with a decoded image. The controller 170 may display a thumbnail list including a plurality of received thumbnail images on the display 180.

The thumbnail list may be displayed on a part of the display 180 with an image displayed on the display 180, that is, as a compact view, or the thumbnail list may be displayed in full screen on the display 180. The thumbnail images of the thumbnail list may be updated sequentially.

The display 180 generates drive signals by converting a processed video signal, a processed data signal, an On Screen Display (OSD) signal, and a control signal received from the controller 170 or a video signal, a data signal, and a control signal received from the external device interface 130.

The display 180 may be various types of displays such as a Plasma Display Panel (PDP), a Liquid Crystal Display (LCD), an Organic Light-Emitting Diode (OLED) display, and a flexible display. The display 180 may also be capable of displaying 3D images. The display 180 may also be a touch screen that can be used not only as an output device but also as an input device.

The audio output unit 185 may receive a processed audio signal from the controller 170 and output the received audio signal as voice.

The camera module captures an image of a user. The camera module may include, but not limited to, a single camera. When needed or desired, the camera module may include a plurality of cameras. The camera module may be embedded above the display 180 in the image display apparatus 100, or may be separately configured. Image information captured by the camera module may be provided to the controller 170.

The controller 170 may sense a user's gesture from a captured image received from the camera module or from signals received from the sensor unit alone or in combination.

The remote controller 200 transmits a user input to the user input interface 150. For the transmission of a user input, the remote controller 200 may operate based on various communication standards such as Bluetooth, RF, IR, Ultra VllideBand (UWB), ZigBee, and NFC.

In addition, the remote controller 200 may receive a video signal, audio signal and/or data signal from the user input interface 150 and output the received signal as an image or sound.

In accordance with an embodiment of the invention, the remote controller 200 may receive personal information from a specific electronic device by NFC. As described before, the personal information may include a user ID and a password with which to use a portable terminal, an image display apparatus, or an electronic device. Although personal information may be different for each device, the following description is given on the assumption of one universal user ID and password.

The remote controller 200 may transmit the received personal information to the image display apparatus 100 by IR or RF communication.

A description is given of embodiments of the invention with the appreciation that the remote controller 200 is a pointing device capable of displaying a pointer in correspondence with a user's motion. That is, the remote controller 200 may transmit personal information to the image display apparatus 100 by RF communication.

Besides the personal information, the remote controller 100 may receive information about a Web server connected based on the personal information. For instance, the remote controller 200 may receive information about an SNS Web server to which a portable terminal is logging into. The Web server information is also transmitted to the image display apparatus 100.

Meanwhile, the remote controller 200 may receive controllable channel information, frequency information, or code information about other electronic devices near to the image display apparatus 100 from the other electronic devices. The remote controller 200 may assign a channel, frequency or code to an electronic device based on the information about the other electronic devices, for remotely controlling the electronic device. The above-described image display apparatus 100 may be a fixed or mobile digital broadcast receiver.

The block diagram of the image display apparatus 100 illustrated in FIG. 2 is an example embodiment of the invention. The image display apparatus 100 is shown in FIG. 2 as having a number of components in a given configuration. However, the image display apparatus 100 may include fewer components or more components than those shown in FIG. 1 in other embodiments. Also, two or more components of the image display apparatus 100 may be combined into a single component or a single component thereof may be separated into two more components in other embodiments. The functions of the components of the image display apparatus 100 as set forth herein are illustrative in nature and may be modified, for example, to meet the requirements of a given application of the image display apparatus.

Unlike the configuration illustrated in FIG. 2, the image display apparatus 100 may be configured so as to receive and playback video content through the network interface 130 or the external device interface 135, without the tuner unit 100 and the demodulator 120.

FIG. 3 is a block diagram of the controller illustrated in FIG. 2. Referring to FIG. 3, the controller 170 may include a DEMUX 310, a video processor 320, a processor 330, an OSD generator 340, a mixer 345, a Frame Rate Converter (FRC) 350, and a formatter 360 according to an embodiment of the invention. The controller 170 may further include an audio processor and a data processor.

The DEMUX 310 demultiplexes an input stream. For example, the DEMUX 310 may demultiplex an MPEG-2 TS into a video signal, an audio signal, and a data signal. The input stream signal may be received from the tuner unit 110, the demodulator 120 or the external device interface 135.

The video processor 320 may process the demultiplexed video signal. For video signal processing, the video processor 320 may include a video decoder 325 and a scaler 335.

The video decoder 325 decodes the demultiplexed video signal and the scaler 335 scales the resolution of the decoded video signal so that the video signal can be displayed on the display 180. The video decoder 325 may be provided with decoders that operate based on various standards.

The processor 330 may provide overall control to the image display apparatus 100 or the controller 170. For example, the processor 330 may control the tuner unit 110 to tune to an RF broadcasting corresponding to a user-selected channel or a pre-stored channel.

The processor 330 may also control the image display apparatus 100 according to a user command received through the user input interface 150 or an internal program. The processor 330 may control data transmission through the network interface 135 or the external device interface 130. The processor 330 may control operations of the DEMUX 310, the video processor 320, and the OSD generator 340 in the controller 170.

The OSD generator 340 generates an OSD signal autonomously or according to a user input. For example, the OSD generator 340 may generate signals by which a variety of information is displayed as graphics or text on the display 180, according to user input signals. The OSD signal may include various data such as a User Interface (Ul), a variety of menus, widgets, icons, etc. Also, the OSD signal may include a 2D object and/or a 3D object.

Further, the OSD generator 340 may generate a pointer to be displayed on the display 180 based on a pointing signal received from the remote controller 200. Especially, the pointer may be generated from a pointing signal processor, which may reside in the OSD generator 240. Obviously, the pointing signal processor may be configured separately.

In case of log-in to the image display apparatus 100, the OSD generator 340 may generate or configure a set personalized page. In case of log-in to a connected server, the OSD generator 340 may generate or configure at least a part of a server connection page received from the server on the display 180. Alternately, the OSD generator 340 may generate or configure at least a part of the server connection page based on information about a Web server connected based on the personal information.

The mixer 345 may mix the decoded video signal processed by the video processor 320 with the OSD signal generated from the OSD generator 340. The OSD signal and the decoded video signal each may include at least one of a 2D signal or a 3D signal. The mixed video signal is provided to the FRC 350.

The FRC 350 may change the frame rate of the mixed video signal or simply output the mixed video signal without frame rate conversion.

The formatter 360 may arrange left-eye and right-eye video frames of the frame rate-converted 3D image and may also output a synchronization signal Vsync to open the left or right lens of the viewing device.

The formatter 360 may receive the mixed signal, namely the OSD signal and the decoded video signal in combination from the mixer, change the format of the mixed signal suitably for the display 180, and output the format-changed signal. For example, the formatter 360 may output an R.G.B data signal. The R.G.B data signal may take the form of a Low Voltage Differential Signal (LVDS) or mini-LVDS.

For 3D visualization, the formatter 360 may separate a 2D video signal and a 3D video signal from the mixed video signal of the OSD signal and the decoded video signal received from the mixer 345. In addition, the formatter 360 may change the format of a 3D video signal or convert a 2D video signal to a 3D video signal.

The audio processor of the controller 170 may process the demultiplexed audio signal. For the audio signal processing, the audio processor may have a plurality of decoders.

The audio processor of the controller 170 may also adjust the bass, treble, and volume of the audio signal.

The data processor of the controller 170 may process the data signal obtained by demultiplexing the input stream signal. For example, if the demultiplexed data signal is a coded data signal, the data processor may decode the coded data signal. The coded data signal may be an EPG which includes broadcast information specifying the start time, end time, etc. of scheduled broadcast TV or radio programs.

While it is shown in FIG. 3 that the mixer 345 mixes signals received from the OSD generator 340 and the video processor 320 and then the formatter 360 performs 3D processing on the mixed signal, to which embodiments of the invention are not limited, the mixer 345 may be positioned after the formatter 360.

The block diagram of the image display apparatus 100 illustrated in FIG. 3 is purely by example. Depending upon the specifications of the image display apparatus 100 in actual implementation, the components of the image display apparatus 100 may be combined or omitted or new components may be added. That is, two or more components are incorporated into one component or one component may be configured as separate components, as needed. Especially, the FRC 350 and the formatter 360 may be configured separately outside the controller 170.

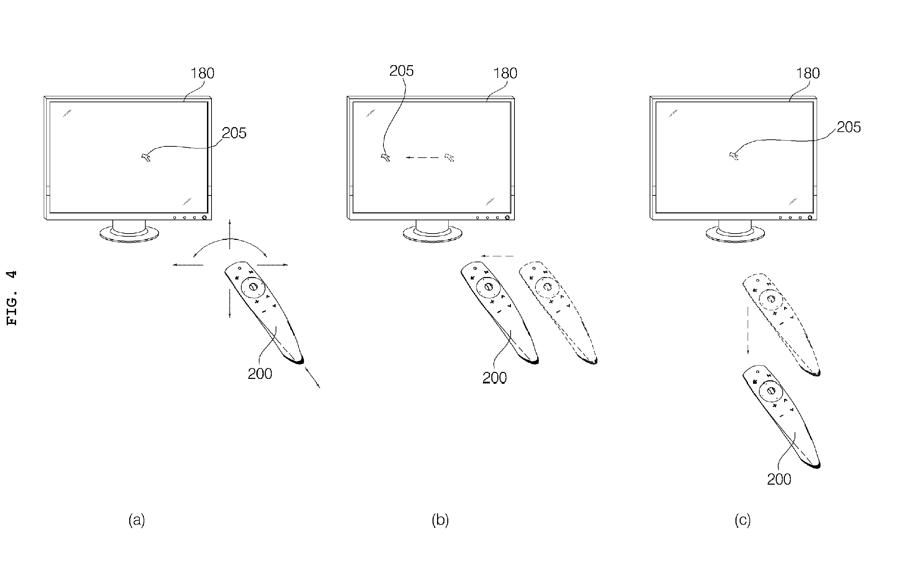

FIG. 4 illustrates a method for controlling the remote controller illustrated in FIG. 2 according to an embodiment of the invention. (a) of FIG. 4 illustrates a pointer 205 representing movement of the remote controller 200 displayed on the display 180.

The user may move or rotate the remote controller 200 up and down, side to side ((b) of FIG. 4), and back and forth (FIG. 4(c)). Since the pointer 205 moves in accordance with the movement of the remote controller 200, the remote controller 200 may be referred to as a pointing device. Referring to (b) of FIG. 4, if the user moves the remote controller 200 to the left, the pointer 205 moves to the left on the display 180.

A sensor of the remote controller 200 detects the movement of the remote controller 200 and transmits motion information corresponding to the result of the detection to the image display apparatus 100. Then, the image display apparatus 100 determines the movement of the remote controller 200 based on the motion information received from the remote controller 200, and calculates the coordinates of a target point to which the pointer 205 should be shifted in accordance with the movement of the remote controller 200 based on the result of the determination. The image display apparatus 100 then displays the pointer 205 at the calculated coordinates.

Referring to (c) of FIG. 4, while pressing a predetermined button of the remote controller 200, the user may move the remote controller 200 away from the display 180. In such an instance, a selected area corresponding to the pointer 205 may be zoomed in and enlarged on the display 180. On the contrary, if the user moves the remote controller 200 toward the display 180, the selection area corresponding to the pointer 205 is zoomed out and thus contracted on the display 180. The opposite case is possible. That is, when the remote controller 200 moves away from the display 180, the selection area may be zoomed out and when the remote controller 200 approaches the display 180, the selection area may be zoomed in.

With the predetermined button pressed in the remote controller 200, the up, down, left and right movements of the remote controller 200 may be ignored. That is, when the remote controller 200 moves away from or approaches the display 180, only the back and forth movements of the remote controller 200 are sensed, while the up, down, left and right movements of the remote controller 200 are ignored. Unless the predetermined button is pressed in the remote controller 200, the pointer 205 moves in accordance with the up, down, left or right movement of the remote controller 200. The speed and direction of the pointer 205 may correspond to the speed and direction of the remote controller 200.

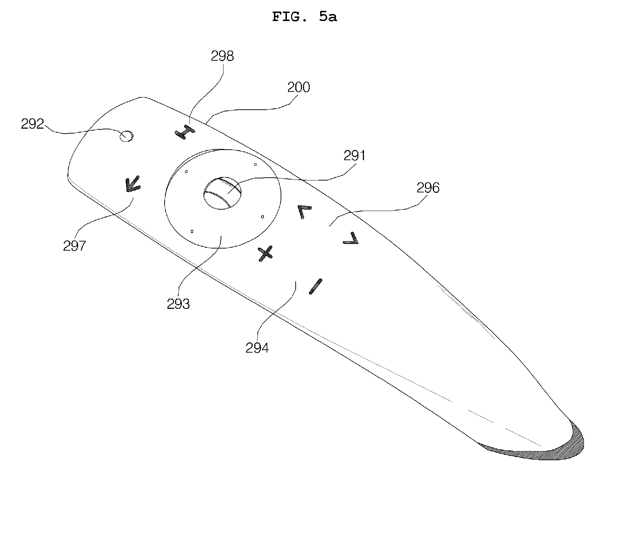

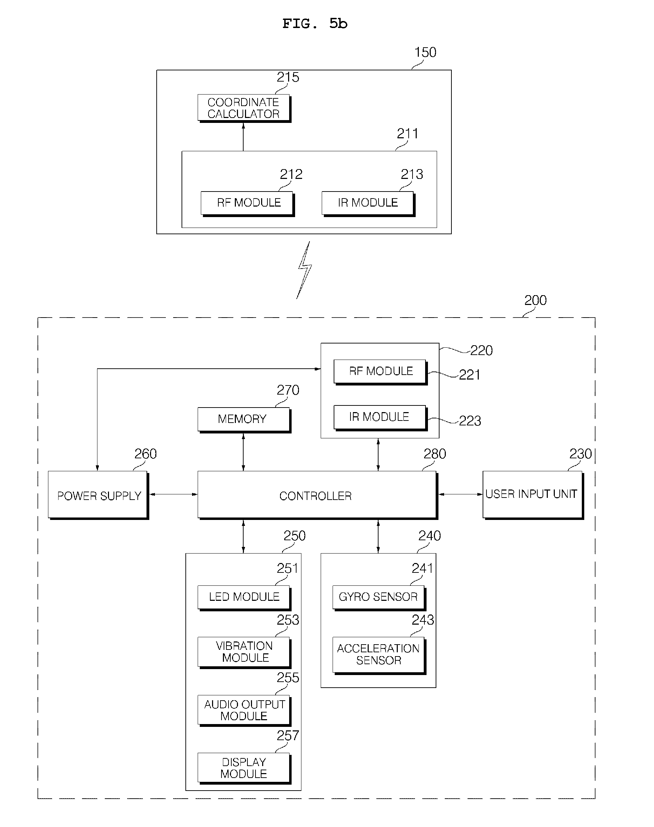

FIG. 5A is a perspective view of a remote controller according to an embodiment of the invention and FIG. 5B is a block diagram of the remote controller.

Referring to FIG. 5A, a remote controller 200 or a pointing device 201 according to an embodiment of the invention may include a plurality of input keys or buttons. For example, the pointing device 201 may include an OK key 291, a Menu key 292, a 4-directional key 293, a Channel key 294, and a Volume key 296.

For example, the OK key 291 may be used to select a menu or an item. The Menu key 292 may be used to display a specific menu and the 4-directional key 293 may be used to move a pointer or an indicator up, down, to the left, or to the right. With the Channel key 294, a user may increase or decrease a channel number. The Volume key 296 may be used to increase or decrease sound volume.

The pointing device 201 may further include a Back key 297 and a Home key 298. For example, a previous screen may appear by pressing the Back key 297. The Home key 298 may take the user to a home screen.

As illustrated in FIG. 5A, the OK key 291 may be equipped with a scroll function. Thus, the OK key 291 may be configured into a wheel key. When the OK key 291 is pressed, a menu or item may be selected. If the OK key 291 is scrolled up or down, a displayed screen may be scrolled up or down or a page may be turned to a previous or next page.

Specifically, when a part of an image is displayed on the display 180 because the image is too large for the display size of the display 180, another part of the image may be displayed on the display 180 by scrolling the OK key 291. In another example, when a list page is displayed on the display 180, the list page may be turned to the previous or next page by scrolling the OK key 291. The scroll function may be implemented by a separate procedure key instead of the OK key 291.

The 4-directional key 293 may be configured into a ring with up, down, left and right keys arranged at four directional positions. For example, when a user touches from the up key to the down key, a predetermined function set for the touch input may be input or performed.

Referring to FIG. 5B, the remote controller 200 may include a wireless communication module 220, a user input unit 230, a sensor unit 240, an output unit 250, a power supply 260, a memory 270, and a controller 280. The wireless communication module 220 may transmit signals to and/or receive signals from the image display apparatus 100.

In the embodiment of the present invention, the interface 150 of the image display apparatus 100 may include a wireless communication module 211 for wirelessly transmitting and receiving signals to and from the remote controller 200, and a coordinate calculator 215 for calculating the coordinates of the pointer corresponding to an operation of the remote controller 200. Further, the interface 150 may transmit and receive signals wirelessly to and from the remote controller 200 through the RF module 212. The interface 150 may also receive a signal from the remote controller 200 through the IR module 213 based on the IR communication standard.

The coordinate calculator 215 may calculate the coordinates (x, y) of the pointer to be displayed on the display 180 by correcting a handshaking or errors from a signal corresponding to an operation of the remote controller 200 received through the wireless communication module 220.

Thereafter, a signal received from the remote controller 200 through the interface 150 is provided to the controller 170 of the image display apparatus 100. The controller 170 may identify information about an operation of the remote controller 200 or a key manipulation on the remote controller 200 from the signal received from the remote controller 200 and control the image display apparatus 100 according to the identical information.

In another example, the remote controller 200 may calculate the coordinates of the pointer corresponding to the operation of the pointing device and output the coordinates to the interface 150 of the image display apparatus 100. The interface 150 of the image display apparatus 100 may then transmit the received coordinate information to the controller 170 without correcting a handshaking or errors.

In the embodiment of the invention, the wireless communication module 220 may include an RF module 221 for transmitting RF signals to and/or receiving RF signals from the image display apparatus 100 according to an RF communication standard. The wireless communication module 220 may also include an IR module 223 for transmitting IR signals to and/or receiving IR signals from the image display apparatus 100 according to an IR communication standard.

The remote controller 200 may further include an NFC module for communicating with an electronic device by NFC. The remote controller 200 transmits motion information regarding the movement of the remote controller 200 to the image display apparatus 100 through the RF module 221 in the embodiment of the invention.

The remote controller 200 may also receive signals from the image display apparatus 100 through the RF module 221. The remote controller 200 may transmit commands, such as a power on/off command, a channel switching command, or a sound volume change command, to the image display apparatus 100 through the IR module 223, as needed or desired.

In accordance with the embodiment of the invention, the remote controller 200 may receive personal information from an electronic device by NFC. The remote controller 200 may transmit the received personal information to the image display apparatus 100 by IR or RF communication.

Besides the personal information, the remote controller 200 may receive information about a Web server connected based on the personal information. For example, the remote controller 200 may receive information about an SNS Web server to which a portable terminal is logging into. The Web server information may also be transmitted to the image display apparatus 100.

Meanwhile, the remote controller 200 may receive device information, remote controllable channel information, frequency information, or code information about other electronic devices and assign a channel, frequency, or code to a specific electronic device based on the information about the other electronic devices, to remotely control the specific electronic device.

The user input unit 230 may include a keypad, a plurality of buttons, and/or a touch screen. The user may enter commands to the image display apparatus 100 by manipulating the user input unit 230. If the user input unit 230 includes a plurality of hard-key buttons, the user may input various commands to the image display apparatus 100 by pressing the hard-key buttons. Alternatively or additionally, if the user input unit 230 includes a touch screen displaying a plurality of soft keys, the user may input various commands to the image display apparatus 100 by touching the soft keys. The user input unit 230 may also include various input tools other than those set forth herein, such as a scroll key and/or ajog key, which should not be construed as limiting the invention.

The sensor unit 240 may include a gyro sensor 241 and/or an acceleration sensor 243. For example, the gyro sensor 241 may sense the movement of the remote controller 200, for example, in X-, Y-, and Z-axis directions, and the acceleration sensor 243 may sense the moving speed of the remote controller 200. The sensor unit 240 may further include a distance sensor for sensing the distance between the remote controller 200 and the display 180.

The output unit 250 may output a video and/or audio signal corresponding to a manipulation of the user input unit 230 or a signal transmitted by the image display apparatus 100. The user may easily identify whether the user input unit 230 has been manipulated or whether the image display apparatus 100 has been controlled based on the video and/or audio signal output by the output unit 250.

The output unit 250 may include a Light Emitting Diode (LED) module 251 which is turned on or off whenever the user input unit 230 is manipulated or whenever a signal is received from or transmitted to the image display apparatus 100 through the wireless communication module 220, a vibration module 253 which generates vibrations, an audio output module 255 which outputs audio data, and a display module 257 which outputs an image.

The power supply 260 supplies power to the remote controller 200. If the remote controller 200 is kept stationary for a predetermined time or longer, the power supply 260 may, for example, reduce or cut off supply of power to the remote controller 200 in order to save power. The power supply 260 may resume supply of power if a specific key on the remote controller 200 is manipulated.

The memory 270 may store various application data for controlling or operating the remote controller 200. The remote controller 200 may wirelessly transmit signals to and/or receive signals from the image display apparatus 100 in a predetermined frequency band through the RF module 221. The controller 280 of the remote controller 200 may store information regarding the frequency band used for the remote controller 200 to wirelessly transmit signals to and/or wirelessly receive signals from the paired image display apparatus 100 in the memory 270 and may then refer to this information for use at a later time.

In addition, the memory 270 may store IR format key codes for controlling other electronic devices by IR signals or an IR format key database for a plurality of electronic devices.

The controller 280 provides overall control to the remote controller 200. For example, the controller 280 may transmit a signal corresponding to a key manipulation detected from the user input unit 230 or a signal corresponding to motion of the remote controller 200, as sensed by the sensor unit 240, to the image display apparatus 100 through the wireless communication module 220.

The controller 280 may control transmission of personal information received from an electronic device by NFC to the image display apparatus 100 through the wireless communication module 220. Especially upon receipt of a specific key input from the user input unit 230, the controller 280 may control transmission of the received personal information to the image display apparatus 100 through the wireless communication module 220.

Besides, the controller 280 may control transmission of the received personal information to electronic devices other than the image display apparatus 100 through the wireless communication module 220. Herein, the controller 280 may use a different channel, frequency or code for each of the other electronic devices. The channels, frequencies, or codes may be determined based on device information, remote controllable channel information, frequency information, or code information that has already been received from the other electronic devices.

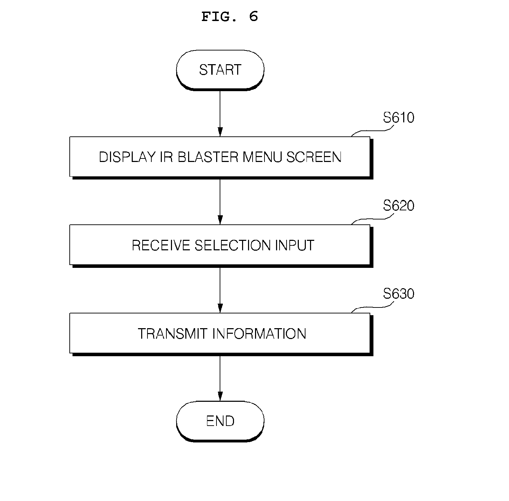

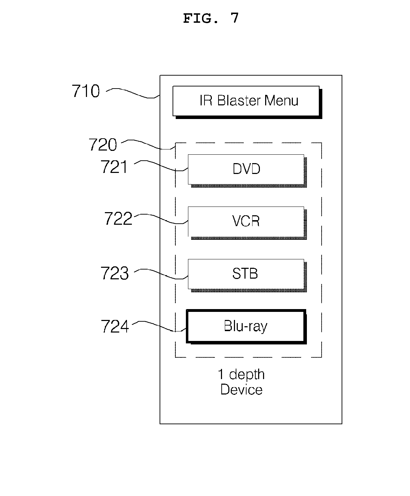

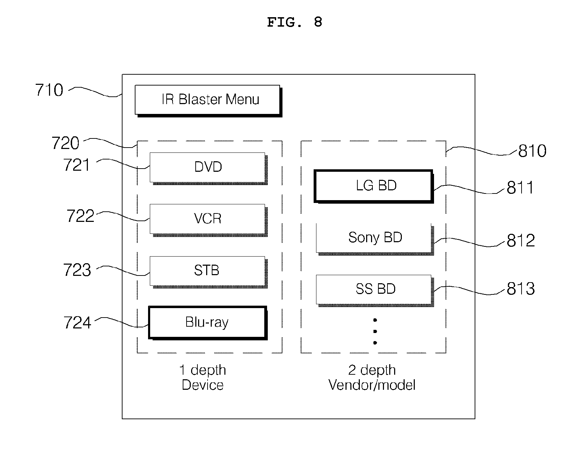

FIG. 6 is a flowchart illustrating a method for operating the image display apparatus according to an embodiment of the invention, and FIGS. 7 and 8 are views referred to for describing the method for operating the image display apparatus, illustrated in FIG. 6.

Referring to FIG. 6, the image display apparatus 100 displays an IR blaster menu screen on the display 180 (S610). Specifically, the IR blaster menu screen may be displayed in correspondence with a predetermined key input, for example, an IR blaster key input from the remote controller 200 or a local key input from the image display apparatus 100.

Alternatively or additionally, upon selection of an object representing an IR blaster menu on the display 180, the IR blaster menu screen may be displayed.

FIGS. 7 and 8 illustrate an example IR blaster menu screen. Referring to FIGS. 7 and 8, an IR blaster menu screen 710 may include an upper menu (1-depth menu) 720 from which one of electronic device types 721 to 724 may be selected and a lower menu (2-depth menu) 810 from which one of vendors/models 811 to 813 may be selected.

On the IR blaster menu screen 710, the upper menu 720 may first be displayed as shown in FIG. 7. Upon selection of one item (device type) from the upper menu 720, for example, the item 724, the lower menu 810 corresponding to the selected item 724 may be displayed.

Alternatively, the upper menu 720 and the lower menu 810 may be displayed simultaneously on the IR blaster menu screen 710 as shown in FIG. 8.

The image display apparatus 100 receives a selection input that selects one of the electronic devices on the IR blaster menu screen 710, for example, the item 811 (S620). The user input interface 150 may receive the selection input from the remote controller 200.

The controller 170 may control transmission of IR format key information or device information about the selected electronic device 811 to the remote controller 200 (S630).

Information that the controller 170 transmits to the remote controller 200 may vary according to embodiments of the invention.

For example, if the memory 140 pre-stores the IR format key information about the selected electronic device 811, the image display apparatus 100 may transmit the IR format key information about the selected electronic device 811 to the remote controller 200.

If upon receipt of a command input from a user, the remote controller 200 requests IR format key information corresponding to the command input to the image display apparatus 100, the image display apparatus 100 may transmit the IR format key information corresponding to the command input to the remote controller 200.

This refers to the fact that the image display apparatus 100 may transmit only requested information about the individual command input to the remote controller 200, instead of the entire IR format key information about the selected electronic device 811.

Meanwhile, the remote controller 200 may request the IR format key information corresponding to the received command input to the image display apparatus 100 by transmitting the command input to the image display apparatus 100.

The memory 140 may store an IR format key database including the IR format key information about the selected electronic device 811.

If the memory 140 stores the IR format key database, the image display apparatus 100 may update the IR format key database periodically or upon receipt of a command.

In the absence of the IR format key information about the selected electronic device 811 in the memory 140, the image display apparatus 100 may automatically download the IR format key information about the selected electronic device 811 through a network and transmit it to the remote controller 200.

Meanwhile, in the case where the remote controller 200 stores IR format key information, the image display apparatus 100 may transmit the device information about the selected electronic device 811 to the remote controller 200 so that the remote controller 200 can identify the selected electronic device 811.

Referring back to FIG. 5B, the user input interface 150 includes an RF module 212 and an IR module 213. Thus, the user input interface 150 may transmit the information to the remote controller 200 by RF communication and/or IR communication in operation S630.

Due to the advantage of no limitations in distance and direction compared to IR communication, RF transmission of the IR format key information or device information about the selected electronic device 811 to the remote controller 200 enables the user to contrd the electronic device 811 more conveniently.

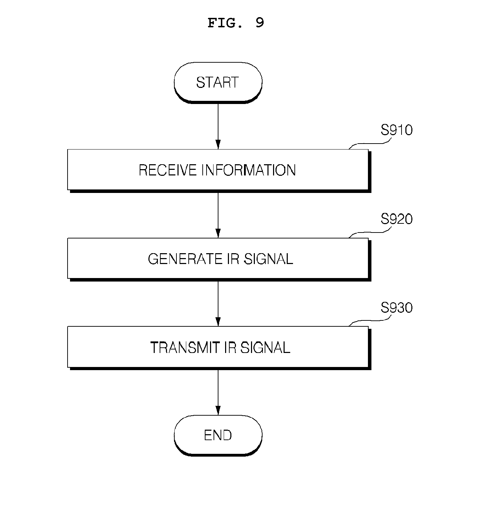

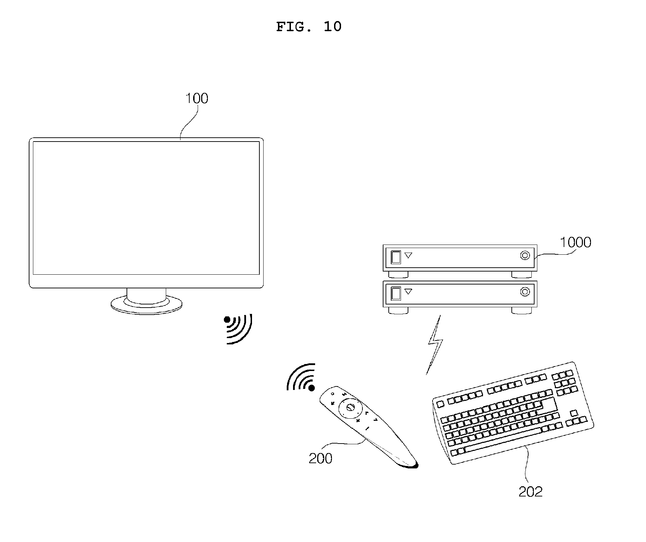

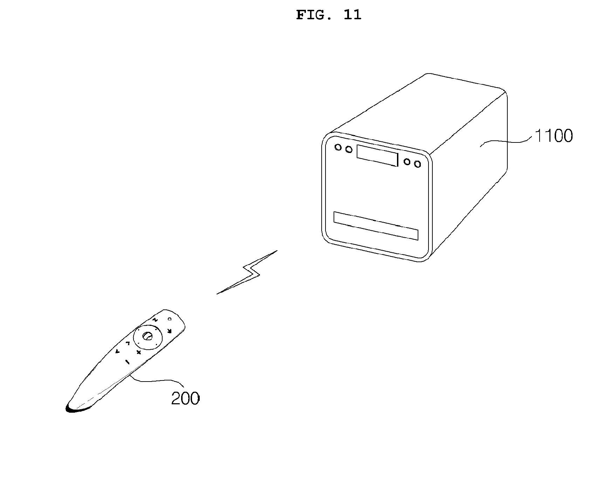

FIG. 9 is a flowchart illustrating a method for operating the remote controller according to an embodiment of the invention, and FIGS. 10 and 11 are views referred to for describing the method for operating the remote controller, illustrated in FIG. 9.

Referring to FIG. 9, the remote controller 200 receives IR format key information or device information about a specific electronic device 1000 (S910).

The embodiments of the invention are not limited to any specific shape or implementation of the remote controller 200. For example, a remote controller 202 shaped like a keyboard is also available as illustrated in FIG.10.

The remote controller 200 may include a first module for receiving the information from the image display apparatus 100. The first module may be the RF module 221 and thus the RF module 221 may receive the information from the image display apparatus 100 by RF communication.

Compared to IR communication, RF communication does not have limitations in distance and direction. Therefore, since the user can receive data at a far distance by RF communication, relative to IR communication, the user may move near to an intended electronic device and then control the electronic device using the remote controller 200.

That is, the user may control an electronic device 1100 relatively far from the image display apparatus 100 using the remote controller 200 as well as the electronic device 1000 near to the image display apparatus 100. After receiving information about the electronic device 1100 from the image display apparatus 100, the remote controller 200 may move near to the electronic device 1100 and contrd it.

The controller 280 controls generation or changing of an IR signal suitably for the IR format key of the electronic device based on the received information and a received command (S920).

If the remote controller 200 receives the IR format key information about the selected electronic device from the image display apparatus 100, the controller 280 may generate the IR signal based on IR format key information corresponding to the command among the IR format key information about the electronic device.

That is, upon receipt of a command input from the user after receiving the information required to control the electronic device from the image display apparatus 100, the controller 280 may extract a signal mapped to the command input from the received information and generate an IR signal corresponding to the command based on the extracted signal.

Alternatively or additionally, the remote controller 200 may further include the memory 270 for storing an IR format key database including the IR format key information about the electronic device corresponding to the received device information.

That is, in the case where the memory 270 of the remote controller 200 stores the IR format key data base, the remote controller 200 may receive only information indicating the electronic device selected by the user from the image display apparatus 100.

In this case, the controller 280 may generate the IR signal based on information corresponding to the device information in the pre-stored IR format key database.

Alternatively or additionally, the method for operating the remote controller may further include an operation of receiving a command input from a user and an operation of requesting IR format key information corresponding to the received command input to the image display apparatus.

Specifically, upon receipt of a command input from the user, the remote controller 200 may request IR format key information corresponding to the received command input. Then the image display apparatus 100 may transmit the IR format key information corresponding to the received command input to the remote controller 200.

Therefore, each time the remote controller 200 needs an IR format key corresponding to a command input received from a user, the remote controller 200 may request and receive the IR format key corresponding to the received command input.

That is, IR format key information corresponding to an individual command may be transmitted, instead of the entire IR format key information about the selected electronic device.

If the entire IR format key information about the selected electronic device has been received but information corresponding to the command input does not exist in the received IR format key information, the remote controller 200 may request the information corresponding to the command input to the image display apparatus 100.

Even when the controller 280 receives the IR format key information from the image display apparatus 100, it may temporarily store the received IR format key information in the memory 270.

Subsequently, the controller 280 may control transmission of then IR signal generated from a second module other than the first module to the selected electronic device (S930).

The second module may be the IR module 223 and thus the IR module 223 may transmit the information to the electronic device by IR communication.

In this manner, the remote controller 200 can receive information that is required to control an electronic device using an IR signal from the image display apparatus 100 via an RF signal without limitations in distance and direction. In addition, the remote controller 200 can transmit an IR signal to the electronic device from a position from which the electronic device can receive the IR signal without errors.

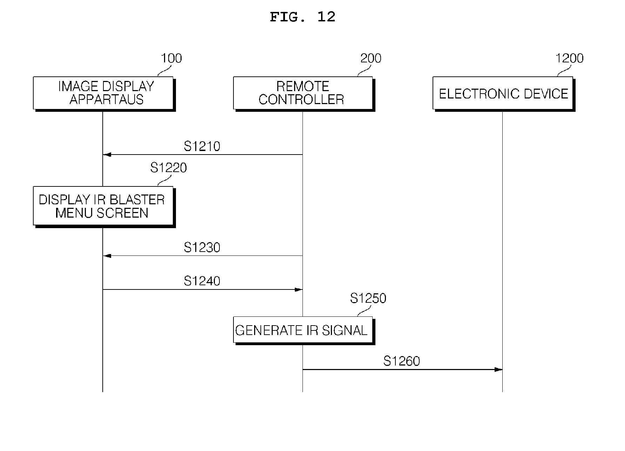

FIG. 12 is a diagram illustrating the method for operating the image display apparatus and the remote controller.

Referring to FIG. 12, the remote controller 200 may transmit a signal corresponding to a predetermined key input, for example, an IR blaster key input, or a selection signal indicating selection of an object representing an IR blaster menu displayed on the display 180 to the image display apparatus 100 (S1210). Herein, signals between the remote controller 200 and the image display apparatus 100 may be RF signals.

The image display apparatus 100 displays an IR blaster menu screen on the display 180 (S1220).

The remote controller 200 may transmit an input that selects one of external electronic devices to the image display apparatus 100 (S1230), and the image display apparatus 100 may transmit information required to control the selected external electronic device to the remote controller 200 (S1240).

In the case where the memory 140 of the image display apparatus 100 stores IR format key information, the controller 170 may retrieve IR format key information about the selected external electronic device from the memory 140 and control transmission of the IR format key information about the selected external electronic device to the remote controller 200.

On the other hand, in the case where the memory 270 of the remote controller 200 stores IR format key information, the controller 170 of the image display apparatus 100 may indicate the selected external electronic device to the remote controller 200.

As described before with reference to FIG. 9, if the image display apparatus 100 transmits information corresponding to an individual command to the remote controller 200, instead of the entire IR format key information about the selected external electronic device in an embodiment of the invention, the operations S1230 and S1240 of exchanging information between the image display apparatus 100 and the remote controller 200 may performed or repeated on a command basis.

That is, the remote controller 200 may request an IR format key corresponding to a user's command input to the image display apparatus 100 and receive the IR format key corresponding to the command input from the image display apparatus 100, each time a command input is received.

For instance, upon receipt of a command input from a user, the remote controller 200 may request IR format key information about the command input to the image display apparatus 100 and the image display apparatus 100 may transmit the IR format key information about the command input to the remote controller 200.

Thus, the remote controller 200 may generate an IR signal based on the received IR format key information about the command input.

Meanwhile, upon receipt of a command input from the user, the remote controller 200 may generate an IR signal corresponding to the command input based on the information received from the image display apparatus 100 (S1250) and may control the external electronic device by transmitting the IR signal to it (S1260).

The IR signal may be newly generated based on the IR format key information or modified from an IR signal used to control the image display apparatus 100 by changing at least one of the number of bits per unit code, the distance between codes, and a code information list in the IR signal used to control the image display apparatus 100.

In embodiments of the invention, the IR format key information refers to an individual code or a set of codes for remotely operating a device and/or its respective functions. For example, the IR format key information may be implemented using various types of codes, such as binary codes, hexa-codes or other codes.

As is apparent from the above description of the embodiments of the invention, an external electronic device can be controlled without the need for using an additional IR transmitter in the image display apparatus.

Since external electronic devices can be controlled freely without spatial limitations facing IR signal transmission and reception, a user can readily control the image display apparatus and external electronic devices. Therefore, user convenience can be increased.

Further, a plurality of external electronic devices can be easily controlled using the remote controller of the image display apparatus. Especially, the use of the remote controller enables control of the external electronic devices irrespective of their locations, that is, without spatial limitations. Consequently, the user convenience is further increased.

The image display apparatus and the method for operating the same according to the foregoing example embodiments are not restricted to the example embodiments set forth herein. Therefore, variations and combinations of the example embodiments set forth herein may fall within the scope of the invention.

The method for operating an image display apparatus according to the foregoing example embodiments may be implemented as code that can be written on a computer-readable recording medium and thus read by a processor. The computer-readable recording medium may be any type of recording device in which data is stored in a computer-readable manner. Examples of the computer-readable recording medium include a ROM, a RAM, a CD-ROM, a magnetic tape, a floppy disc, and an optical data storage. The computer-readable recording medium can be distributed over a plurality of computer systems connected to a network so that computer-readable code is written thereto and executed therefrom in a decentralized manner. Programs, code, and code segments to realize the embodiments herein can be construed by one of ordinary skill in the art.

While the invention has been particularly shown and described with reference to example embodiments thereof, it will be understood by those of ordinary skill in the art that various changes in form and details may be made therein without departing from the spirit and scope of the invention as defined by the following claims.

## Claims

1. A method for operating an image display apparatus, comprising:
displaying an InfraRed (IR) blaster menu screen;
receiving a selection input for selecting one of electronic devices included in the IR blaster menu screen; and
transmitting IR format key information about the selected electronic device or device information about the selected electronic device to a remote controller according to the selection input.

2. The method according to claim 1, wherein the IR blaster menu screen includes an upper level menu listing electronic device types and a lower level menu listing vendors or models for each of the electronic device types.

3. The method according to claim 1, wherein the transmission of the IR format key information comprises transmitting the IR format key information about the selected electronic device or the device information about the selected electronic device to the remote controller by Radio Frequency (RF) communication.

4. The method according to claim 1, wherein the IR format key information about the selected electronic device is pre-stored in a memory of the image display apparatus.

5. The method according to claim 1, further comprising updating an IR format key database.

6. A method for operating a remote controller, comprising:
receiving an InfraRed (IR) format key information about an electronic device or device information about the electronic device from an image display apparatus;
generating an IR signal suitable for an IR format key of the electronic device based on the received IR format key information; and
transmitting the IR signal to the electronic device.

7. The method according to claim 6, wherein the information reception comprises receiving the IR format key information about the electronic device or the device information about the electronic device from the image display apparatus by Radio Frequency (RF) communication.

8. The method according to claim 6, wherein the IR signal transmission comprises transmitting the IR signal to the electronic device by IR communication.

9. The method according to claim 6, further comprising receiving a command input from a user, wherein the IR signal generation comprises generating the IR signal based on information corresponding to the command input in the received IR format key information about the electronic device.

10. The method according to claim 6, wherein the IR signal generation comprises generating the IR signal based on information corresponding to the device information in a pre-stored IR format key database.

11. The method according to claim 6, further comprising:
receiving a command input from a user; and
requesting IR format key information corresponding to the received command input to the image display apparatus.

12. An image display apparatus comprising:
a display configured to display an InfraRed (IR) blaster menu screen;
an interface configured to receive a selection input for selecting one of electronic devices included in the IR blaster menu screen; and
a controller configured to control transmission of IR format key information about the selected electronic device or device information about the selected electronic device to a remote controller according to the selection input.

13. The image display apparatus according to claim 12, wherein the IR blaster menu screen includes an upper level menu listing electronic device types and a lower level menu listing vendors or models for each of the electronic device types.

14. The image display apparatus according to claim 12, wherein the interface comprises a Radio Frequency (RF) module, and the RF module transmits the IR format key information about the selected electronic device or the device information about the selected electronic device to a remote controller by RF communication.

15. The image display apparatus according to claim 12, further comprising a memory for storing an IR format key database including the IR format key information about the selected electronic device.

16. The image display apparatus according to claim 15, wherein the controller controls updating of the IR format key database.

17. A remote controller comprising:
a first module configured to receive an InfraRed (IR) format key information about an electronic device or device information about the electronic device from an image display apparatus;
a controller configured to control generation or changing of an IR signal suitable for an IR format key of the electronic device based on the received information; and
a second module configured to transmit the IR signal to the electronic device.

18. The remote controller according to claim 17, wherein the first module is a Radio Frequency (RF) module, and the RF module receives the IR format key information about the electronic device or the device information about the electronic device from the image display apparatus by RF communication.

19. The remote controller according to claim 17, wherein the second module is an IR module, and the IR module transmits the IR signal to the electronic device by IR communication.

20. The remote controller according to claim 17, further comprising a user input unit configured to receive a command input from a user,
wherein the controller generates the IR signal based on information corresponding to a command input in the received IR format key information about the electronic device.
